## Europäisches Patentamt
## European Patent Office
## Office européen des brevets

(11) Veröffentlichungsnummer: **0 130 388**
**B1**

(12) **EUROPÄISCHE PATENTSCHRIFT**

(45) Veröffentlichungstag der Patentschrift:
04.11.87

(21) Anmeldenummer: **84106223.5**

(22) Anmeldetag: **30.05.84**

(51) Int. Cl.⁴: **F 16 D 49/16**

(54) **Mechanische Bremse.**

(30) Priorität: **31.05.83 BG 61159/83**

(43) Veröffentlichungstag der Anmeldung:
**09.01.85 Patentblatt 85/2**

(45) Bekanntmachung des Hinweises auf die Patenterteilung:
**04.11.87 Patentblatt 87/45**

(84) Benannte Vertragsstaaten:
**AT DE FR GB IT**

(56) Entgegenhaltungen:
**DE-C-375 584**
**GB-A-1 580 404**
**US-A-1 263 290**
**US-A-1 499 807**

**"Tormosnie Ustrojstva v Maschinostroenii",**
**M.P.Alexandrov, Moskva, Maschinostroenie, 1965,**
**Seite 34, Fig.22a**

(73) Patentinhaber: **C N I I T M
"BALKANKARPROGRESS", 126, Boul.9- ti
Septemvri, Sofia (BG)**

(72) Erfinder: **Slavov, Georgi Vassiliev, Komplex
Lyulin, Bl.120- A, Sofia (BG)**
Erfinder: **Nenkov, Nenko Zlatanov, Komplex
Tolstoy- 2, Bl.26- E, Sofia (BG)**
Erfinder: **Kantchev, Kantcho Ivanov, Vl.Bazov
Street 16, Sofia (BG)**
Erfinder: **Dimitrov, Mihail Ivanov, Komplex
Serdika, Bl.22- B, Sofia (BG)**
Erfinder: **Pogatchev, Sasho Petrov, 126, Boul.9- ti
Septemvri,Bl.3/I, Sofia (BG)**
Erfinder: **Krumov, Assen Ivanov, 4, Livada Str.,
Sofia (BG)**
Erfinder: **Radnev, Nikola Nikolov, Bl.2/A, Baba
Iliiza Str., Sofia (BG)**
Erfinder: **Angelov, Kiril Petrov, Bl.218/6, Komplex
Borovo, Sofia (BG)**
Erfinder: **Ivanov, Rumen Ivanov, Bl.91/E, Komplex
Mladost- I, Sofia (BG)**
Erfinder: **Lekov, Alexander Pentchev, Bl.030/B,
Komplex Lyulin, Sofia (BG)**
Erfinder: **Yontchev, Alexander Tzekov, 18, N.Liliev
Str., Sofia (BG)**
Erfinder: **Sotirova, Maria Stefanova, Bl.144- 2,
Komplex Hypodruma, Sofia (BG)**

(74) Vertreter: **Finck, Dieter, Patentanwälte v. Füner,
Ebbinghaus, Finck Mariahilfplatz 2 & 3, D-8000
München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft eine bei Transportfahrzeugen und insbesondere Flurförderern einsetzbare mechanische Bremse der im Oberbegriff des Anspruchs 1 genannten Art, die aus der US-A-1 499 807 bekannt ist.

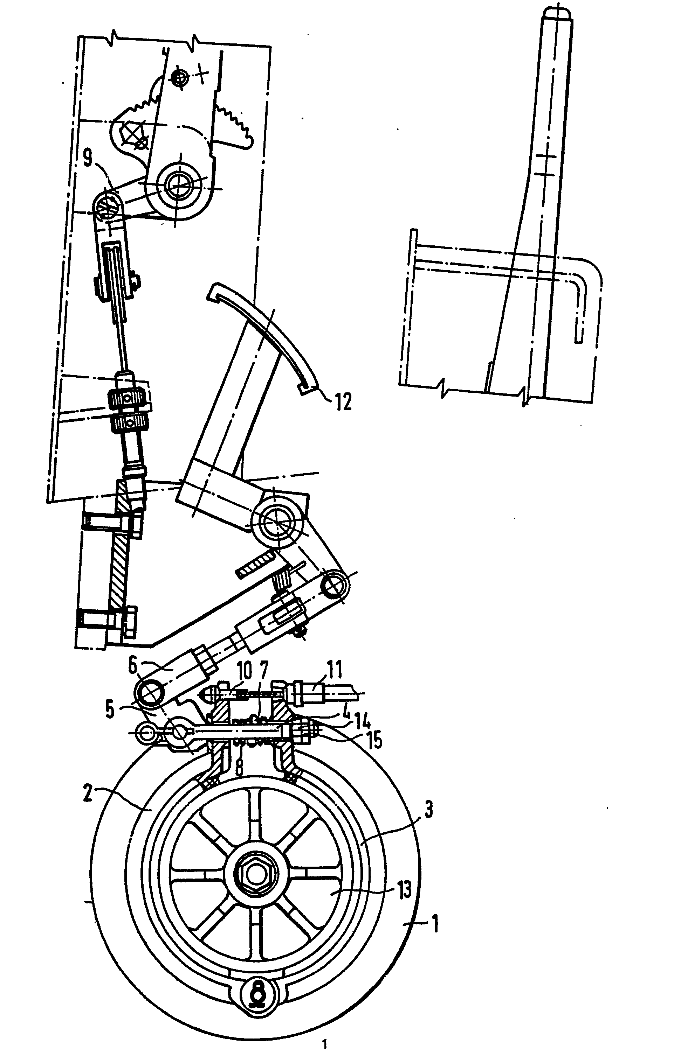

Aus "Tormosnie Ustrojstva v Maschinostroenii", M.P. Alexandrov, Moskva, Maschinostroenie, 1965, Seite 34, Fig. 22a ist eine mechanische Bremse bekannt, bei der das Verbindungsstück und das Zwischenstück gelenkig verbunden sind. Das Verbindungsstück ist aus zwei durch eine Mutter verbundene Bolzen zusammengesetzt, wobei mittels der Mutter das Spiel zwischen Bremsbacken und Trommel eingestellt wird. Das Zwischenstück stellt ein ternäres Glied dar, an dem die Betätigungsstange und das Verbindungsstück befestigt sind und das mit der einen Bremsbacke verbunden ist.

Der Nachteil dieser Bremse ist das Auftreten von verschleißbedingtem Spiel in den Gelenkverbindungen, was zu einer Ansprechverzögerung der Bremse führt. Außerdem sind die Bremsbacken nicht unabhängig von einer Handbremse zu bewegen.

Bei der aus der eingangs genannten US-A-1 499 807 bekannten Bremse ist das Zwischenstück als Hebel ausgebildet, der schwenkbar an der einen Bremsbacke angebracht ist und mit der anderen Bremsbacke über einen an letzterer ebenfalls schwenkbar angeordneten Bolzen verbunden ist, wobei die beiden Bremsbacken durch eine auf den Bolzen aufgeschobene Feder auseinandergedrückt werden.

Der Nachteil dieser Anordnung besteht darin, daß das Antriebsverhältnis des Helbelsystems über den ganzen Betätigungsweg des Bremspedals praktisch konstant ist, was ein plötzliches und ruckartiges Einsetzen der Bremse zur Folge hat.

Aufgabe der Erfindung ist es, eine mechanische Bremse zu schaffen, bei der der Verschleiß der Bauteile keine Ansprechverzögerung zur Folge hat, die weich zu betätigen ist und wobei die Möglichkeit der unabhängigen Betätigung der Bremsbacken durch eine Handbremse gegeben sein soll.

Diese Aufgabe wird, ausgehend von der Bremse der eingangs genannten Art, durch die im Kennzeichen des Patentanspruchs 1 angegebenen Merkmale gelöst.

Die erfindungsgemäß ausgebildete Bremse hat den Vorteil, daß die Federn zwischen den Bremsbacken das Entstehen von verschleißbedingten Spielen zwischen Nocken, Bolzen und Bremsbacken verhindern. Außerdem läßt sich das Spiel zwischen Bremsbacken und Bremstrommel leicht und schnell einstellen.

Eine bevorzugte Ausgestaltung der erfindungsgemäßen Bremse mit einer zusätzlichen Handbremse, die unabhängig betätigt werden kann, ist im Unteranspruch 2 beschrieben.

Dabei ist aus der GB-A-1 580 404 an sich bekannt, bei Fahrradbremsen ohne einem zweiten Bremssystem das Bowdenzugseil einer Bremse an einem Bremsbacken zu befestigen und an der anderen Bremsbacke, durch die das Bowdenzugseil läuft, die Umhüllung des Bowdenzuges anliegen zu lassen.

Ein Ausführuhgsbeispiel der erfindungsgemäßen mechanischen Bremse ist In der beiliegenden Abbildung dargestellt. Sie zeigt eine Gesamtansicht der mechanischen Bremse.

Die Mechanische Bremse beinhaltet zwei identische Bremsbacken, eine linke 2 und eine rechte 3, die jeweils mit ihrem unteren Ende mit dem Gehäuse 1 gelenkverbunden sind und eine Bremstrommel 13 umfassen. Die linke Bremsbacke 2 ist durch ein als ein an die linke Backe 2 anliegender Nocken 5 ausgebildetes Zwischenstück mit einer Betätigungsstange 6 verbunden, zu der ein durch Bohrungen im oberen Ende beider Backen 2 und 3 durchgehender Bolzen 4 gelenkverbunden ist, der seinerseits die Rolle eines Verbindungsstücks spielt. Der Bolzen 4 ist durch eine Mutter 14 und Kontermutter 15 an die rechte Backe 3 montiert, wobei auf dem Bolten 4 zwischen den beiden Backen 2 und 3 freiliegend zwei identische, durch eine aus Gehäuse 1 befestigte Abstützung 7 getrennte Federn 8 aufgesetzt sind. Oberhalb des Bolzens 4 ist an dem Oberteil der linken Backe 2 das Bowdenzugseil 10 eines Handbremse 2 befestigt, das durch eine Bohrung in der rechten Backe 3 durchgeführt ist, wo auch die Umhüllung 11 des Bowdenzugs der Handbremse 9 anliegt. Die Stange 6 ist mit dem Fußhebel 12 der Fußhebelbremse verbunden.

Die mechanische Bremse wirkt folgendermaßen: Bei Betätigung des Fußhebels 12 wird durch die Stange 6 der Nocken 5 eingeschwenkt, der seinerseits die linke Backe (2) an die Bremstrommel 13 andrückt, wobei durch den Bolzen 4 die rechte Backe 3 angezogen wird, bis sie ebenfalls an der Bremstrommel 13 anliegt. Das Spiel zwischen Backen 2 und 3 wird durch die auf den Bolzen 4 aufgeschraubten Mutter 14 und Kontermutter 15 geregelt, wobei das Gesamtspiel festgelegt wird, das sich dann durch die Abstützung 7 und die freiliegenden Federn 8 auf beide Backen verteilt.

Beim Betätigen der Handbremse 9 wird das Bowdenzugseil 10 angezogen, wodurch die linke Backe 2, an der das Seil befestigt ist, eingeschwenkt wird, und die Umhüllung 11 des Bowdenzugs die ihr als Abstützung dienende rechte Backe 3 ebenfalls einschwenkt.

**Patentansprüche**

1. Mechanische Bremse mit zwei Bremsbacken (2, 3), die an ihren unteren Enden mit einen Gehäuse (1) gelenkig verbunden sind, wobei die linke Bremsbacke (2) durch ein Zwischenstück (5) mit einer Betätigungsstange (6) verbunden ist und an der rechten Bremsbacke (3) das eine Ende eines als Bolzen (4) ausgebildeten Verbindungsstücks befestigt ist, dessen anderes Ende mit dem Zwischenstück (5) gelenkig verbunden ist, und wobei die beiden Bremsbacken (2, 3) durch Federkraft im Abstand von einer Bremstrommel (13) gehalten sind, dadurch gekennzeichnet, daß das Zwischenstück als Nocken (5) ausgebildet ist, der an der linken Bremsbacke (2) anliegt, daß der Bolzen (4) durch Bohrungen im Überteil der beiden Bremsbacken (2, 3) durchgeführt ist, und daß auf dem Bolzen (4) zwischen den beiden Bremsbacken (2, 3) freiliegend zwei Federn (8) aufgesetzt sind, die durch eine am Gehäuse (1) der Bremse befestigte Abstützung (7) getrennt werden.

2. Mechanische Bremse nach Anspruch 1, dadurch gekennzeichnet, daß am Oberteil der linken Bremsbacke (2) oberhalb des Bolzens (4) das Bowdenzugseil (10) einer Handbremse (9) befestigt ist, dessen Umhüllung (11) an einer Bohrung im Oberteil der rechten Bremsbacke (3) anliegt.


**Claims**

1. Mechanical brake with two brake shoes (2, 3) which are pivotally connected at their lower ends with a housing (1), with the left brake shoe (2) being connected by means of an intermediate member (5) with an actuating rod (6) and with there being secured to the right brake shoe (3) the one end of a connecting member constructed as a stay (4), the other end thereof being hingedly connected with the intermediate member (5), and with the two brake shoes (2, 3) being held by means of spring force at a distance from a brake drum (13), characterised in that the intermediate member is formed as cam (5) which is adjacent the left brake shoe (2), that the stay (4) is guided through passages in the upper part of both brake shoes (2, 3), and that two springs (8) which are separated by a support (7) secured to the housing (1) of the brake are mounted freely between the two brake shoes (2, 3).

2. Mechanical brake according to claim 1, characterised in that the Bowden wire cable of a hand brake (9) whose sheathing (11) fits a passage in the upper part of the right brake part (3) is secured to the upper part of the left brake shoe (2) above the stay (4).


**Revendications**

1. Frein mécanique comprenant deux mâchoires de freinage (2, 3), qui sont, au niveau de leur extrémité inférieure, articulées sur un bâti (1), la mâchoire de freinage gauche (2) étant quant à elle reliée à une tige d'actionnement (6) au moyen d'une pièce intermédiaire (5), tandis qu'à la mâchoire de freinage droite (3), est fixée l'une des extrémités d'une pièce de liaison réalisée sous la forme d'un axe (4), dont la seconde extrémité est reliée par une articulation à la pièce intermédiaire (5), les deux mâchoires de freinage (2, 3) étant en outre maintenues écartées vis-à-vis d'un tambour de frein (13) sous l'action d'une force de ressort, caractérisé en ce que la pièce intermédiaire est réalisée sous la forme d'une came (5) qui s'applique contre la mâchoire de freinage gauche (2), en ce que l'axe (4) passe à travers des perçages ménagés dans la partie supérieure des deux mâchoires de freinage (2, 3), et en ce que deux ressorts (8), engagés librement sur l'axe (4), sont insérés entre les deux mâchoires de freinage (2, 3) et sont séparés l'un de l'autre par un organe d'appui (7) fixé au bâti (1) du frein.

2. Frein mécanique selon la revendication 1, caractérisé en ce qu'au-dessus de l'axe (4), est fixé, à la partie supérieure de la mâchoire de freinage gauche (2), le câble de traction Bowden (10) d'un frein à main (9), dont la gaine (11) s'applique autour d'un perçage ménagés dans la partie supérieure de la mâchoire de freinage droite (3).

0 130 388